(19) Europäisches Patentamt

European Patent Office

Office européen des brevets

(11) **EP 0 923 826 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(21) Anmeldenummer: **97935421.4**

(22) Anmeldetag: **02.07.1997**

(51) Int Cl.⁷: **H04L 9/06**, H04L 9/32

(86) Internationale Anmeldenummer:
**PCT/DE97/01397**

(87) Internationale Veröffentlichungsnummer:
**WO 98/010559 (12.03.1998 Gazette 1998/10)**

(54) **ANORDNUNG UND VERFAHREN ZUR KRYPTOGRAPHISCHEN BEARBEITUNG EINES DIGITALEN DATENSTROMS, DER EINE BELIEBIGE ANZAHL VON DATEN AUFWEIST**

DEVICE AND METHOD FOR THE CRYPTOGRAPHIC PROCESSING OF A DIGITAL DATA STREAM PRESENTING ANY NUMBER OF DATA

DISPOSITIF ET PROCEDE DESTINES AU TRAITEMENT CRYPTOGRAPHIQUE D'UN FLUX DE DONNEES NUMERIQUES QUI PRESENTE UN NOMBRE QUELCONQUE DE DONNEES

(84) Benannte Vertragsstaaten:
**AT CH DE FR GB LI NL**

(30) Priorität: **03.09.1996 DE 19635757**

(43) Veröffentlichungstag der Anmeldung:
**23.06.1999 Patentblatt 1999/25**

(73) Patentinhaber: **SIEMENS AKTIENGESELLSCHAFT 80333 München (DE)**

(72) Erfinder:
• **EUCHNER, Martin D-81737 München (DE)**
• **KLASEN, Wolfgang D-85221 Dachau (DE)**

(56) Entgegenhaltungen:
• **ADVANCES IN CRYPTOLOGY - CRYPTO '89. PROCEEDINGS, SANTA BARBARA, CA, USA, 20-24 AUG. 1989, ISBN 3-540-97317-6, 1990, BERLIN, WEST GERMANY, SPRINGER-VERLAG, WEST GERMANY, Seiten 35-43, XP000135668 KOHL J T: "The use of encryption in Kerberos for network authentication" in der Anmeldung erwähnt**
• **ADVANCES IN CRYPTOLOGY - ASIACRYPT'94. 4TH INTERNATIONAL CONFERENCE ON THE THEORY AND APPLICATIONS OF CRYPTOLOGY. PROCEEDINGS, ADVANCES IN CRYPTOLOGY - ASIACRYPT '94. 4TH INTERNATIONAL CONFERENCE ON THE THEORY AND APPLICATIONS OF CRYPTOLOGY, WOLLONGO, ISBN 3-540-59339-X, 1995, BERLIN, GERMANY, SPRINGER-VERLAG, GERMANY, Seiten 278-292, XP000527601 BIHAM E: "Cryptanalysis of multiple modes of operation"**
• **IBM TECHNICAL DISCLOSURE BULLETIN, JULY 1979, USA, Bd. 22, Nr. 2, ISSN 0018-8689, Seiten 640-642, XP002051943 EHRSAM W F ET AL: "Fractional block-size cipher"**

**Beschreibung**

Bei der Übertragung vertraulicher Daten ist es oftmals erforderlich, daß sowohl zum einen die Daten vertraulich sind und zum anderen daß auch sichergestellt wird, daß die empfangenen Daten unverändert und somit auch fehlerfrei übertragen wurden. Diese beiden Eigenschaften werden durch die zwei Sicherheitsdienste der Vertraulichkeit und der Integrität beschrieben.

Bisher war es üblich, die Sicherheitsdienste Vertraulichkeit und "explizite Integrität" zeitlich und logisch voneinander getrennt und in zwei unabhängigen Arbeitsschritten zu realisieren.

Es fand üblicherweise eine Ermittlung eines sog. Message Authentication Codes (MAC) als Nachweis der Integrität statt. Zur Bildungs eines MACs können beispielsweise beliebige Hash-Verfahren oder auch Verfahren gemäß dem ISO-9797-Standard verwendet werden. Anschließend ist es bisher üblich, die Nachricht zu verschlüsseln. Zur Verschlüsselung wurden bei der Übertragung von Datenblöcken sog. Block-Verschlüsselungs-Verfahren eingesetzt. Dabei ist es bekannt, zur stromorientierten Verschlüsselung einen sog. Verkettungsmodus im Rahmen der Block-Verschlüsselung zu verwenden, beispielsweise den sog. Cipher Block Chaining-Modus (CBC-Modus).

Die getrennte Realisierung der beiden Sicherheitsdienste Vertraulichkeit und Integrität in zwei separaten Arbeitsschritten ist sehr aufwendig, was besonders bei Übertragungen von Daten mit benötigter sehr hoher Datenrate von erheblichem Nachteil ist.

Auch ist es beispielsweise bei Verwendung des in dem ISO-9797-Standard beschriebenen Verfahren erforderlich, zwei verschiedene symmetrische Schlüsselpaare zu verwenden und zu verwalten. Dies führt zu einem erheblichen zusätzlichen benötigten Rechenaufwand bei der Schlüsselverwaltung der kryptographischen Schlüssel.

Um sowohl den Sicherheitsdienst Vertraulichkeit als auch den Sicherheitsdienst Integrität in einem Arbeitsschritt gemeinsam zu gewährleisten, wäre ein für die Übertragung von Datenblöcken blockorientierter Verschlüsselungsmodus erforderlich, der die Eigenschaft aufweist, bei zufälligen oder mutwilligen Störungen des verschlüsselten Datenstroms während der Übertragung zwischen einem Sender und einem Empfänger eine starke Fehlerfortpflanzung des entschlüsselten Datenstroms beim Empfänger zu bewirken.

Die bekannten Verkettungsmodi haben oftmals eine schwache Fehlerfortpflanzung aufgrund der sog. Selbstsynchronisierung, beispielsweise der CBC-Modus. Auch die bekannten Verkettungsmodi mit starker Fehlerfortpflanzung enthalten kryptographische Schwächen, wodurch sie für die gemeinsame Gewährleistung der Integrität und der Vertraulichkeit implizit in einem Verschlüsselungsverfahren, d. h. in einem Verfahrensschritt, ungeeignet sind.

Eine Übersicht über verschiedene Verkettungsmodi ist in dem Dokument [1] oder dem Dokument [4] zu finden.

Ein sog. CBC-Message Authentication Code (MAC) enthält nur eine begrenzte und feste Anzahl von Informationsbits. Dadurch ist die Sicherheit eines verwendeten Identitätsprüfwerts (Integrity Check Value, ICV) gegeben. Die Sicherheit des CBC-MACs ist daher nicht skalierbar.

Ferner ist aus dem Dokument [2] ein Verkettungsmodus mit starker Fehlerfortpflanzung, der sog. Plaintext Cipher Block Chaining-Modus (PCBC-Modus), bekannt. In dem Dokument [2] ist ferner beschrieben, daß bei Verwendung des PCBC-Verfahrens eine Veränderung der Reihenfolge der übertragenen verschlüsselten Datenblöcke nicht erkannt werden kann. Aus diesem Grund kann das PCBC-Verfahren sowie auch der CBC-Modus nicht mit einem sog. konstanten Integritätsprüfwert (Constant Integrity Check Value, CICV) zur Sicherung der Vertraulichkeit und der impliziten Integrität eines übertragenen Datenstroms verwendet werden.

Aus [5] ist ein Verkettungsmodus bekannt, bei dem eine in einem Verarbeitungsschritt dreifach verknüpfte Verschlüsselung gemäß dem CBC-Modus, dem CBC-Modus und dem ECB-Modus.

Aus dem Dokument [3] ist das Prinzip der sog. "impliziten" Integrität und das allgemeine Prinzip eines Verkettungsmodus bekannt.

Somit liegt der Erfindung das Problem zugrunde, eine Anordnung und ein Verfahren zur kryptographischen Bearbeitung eines digitalen Datenstroms anzugeben, mit der, bzw. mit dem sowohl der Sicherheitsdienst der Vertraulichkeit als auch der Sicherheitsdienst der Integrität bei verringertem Bedarf an Rechenkapazität möglich ist.

Das Problem wird durch die Anordnung gemäß Patentanspruch 1 sowie durch das Verfahren gemäß Patentanspruch 8 gelöst.

Bei der Anordnung ist für mindestens einen Teil der zu übertragenden Datenblöcke des Datenstroms ein erstes Bearbeitungselement vorgesehen, welches mindestens eine erste Verknüpfungseinheit, eine Verschlüsselungseinheit sowie eine zweite Verknüpfungseinheit enthält. Der ersten Verknüpfungseinheit werden über einen ersten Eingang die Daten des jeweiligen Datenblocks, über den zweiten Eingang die Daten eines vorangegangenen Datenblocks und über einen dritten Eingang eine vorangegangene Zwischengröße zugeführt. Diese Größen werden in der Verknüpfungseinheit zu einer Verknüpfungsgröße verknüpft. Die Verknüpfungsgröße wird der Verknüpfungseinheit zugeführt, in der der ein Block-Verschlüsselungs-Verfahren auf die Verknüpfungsgröße angewendet wird. Das Ergebnis der Block-Verschlüsselung ist eine Zwischengröße, die der zweiten Verknüpfungseinheit zugeführt wird. Ferner wird der zweiten Verknüpfungseinheit ein vorangegangener kryptographisch bearbeiteter Datenblock zugeführt. Durch Verknüpfung der Zwischengröße mit dem vorangegangenen kryptographisch bearbeiteten Datenblock wird der kryptographisch bearbeitete Datenblock für den jeweiligen Datenblock ermittelt. Die Gesamtheit der kryptographisch bearbeiteten Datenblöcke ergibt den zu übertragenden digitalen Datenstrom.

Bei der Anordnung gemäß Patentanspruch 2 werden für mindestens einen Teil kryptographisch bearbeiteter Datenblöcke ein zweites Bearbeitungselement vorgesehen, welches mindestens eine dritte Verknüpfungseinheit, eine Entschlüsselungseinheit, sowie eine vierte Verknüpfungseinheit aufweist. Der dritten Verknüpfungseinheit wird über einen ersten Eingang der empfangene kryptographisch bearbeitete Datenblock und über einen zweiten Eingang mindestens ein vorangegangener kryptographisch bearbeiteter Datenblock zugeführt. Die Datenblöcke werden in der dritten Verknüpfungseinheit miteinander verknüpft. Ergebnis der Verknüpfung in der dritten Verknüpfungseinheit ist die Zwischengröße. Die Zwischengröße wird mit der Entschlüsselungseinheit entschlüsselt und es wird eine Verknüpfungsgröße ermittelt. Der vierten Verknüpfungseinheit wird über einen ersten Eingang die Verknüpfungsgröße über einen zweiten Eingang mindestens eine vorangegangene Zwischengröße und über einen dritten Eingang mindestens ein vorangegangener Datenblock zugeführt und in der vierten Verknüpfungseinheit zu dem Datenblock verknüpft.

Bei der Anordnung gemäß Patentanspruch 3 sind eine Sendeeinheit und eine Empfangseinheit vorgesehen, die jeweils gemäß der Anordnung nach Patentanspruch 1 bzw. gemäß der Anordnung nach Patentanspruch 2 ausgestaltet sind. Ferner ist ein Übertragungssystem zwischen der Sendeeinheit und der Empfangseinheit zur Übertragung des kryptographisch bearbeiteten Datenstroms vorgesehen.

Die Anordnungen weisen u. a. den Vorteil auf, daß erstmals eine Verschlüsselung und eine Integriätssicherung in einem Verarbeitungsschritt, der Verschlüsselung möglich wird. Eine zusätzliche, explizite Integritätssicherung ist bei dieser Anordnung nicht mehr erforderlich. Dies führt zu einer erheblichen, maximal verdoppelbaren Bearbeitungsgeschwindigkeit bei der kryptographischen Bearbeitung eines Datenstroms.

Ferner weisen die Anordnungen den Vorteil auf, daß ein Verkettungsmodus realisiert wird, der den bekannten Verkettungsmodi deutlich überlegen ist, da er zum einen eine starke Fehlerfortpflanzung aufweist und zum anderen auch diejenigen Angriffe erkannt werden können, die mit dem PCBC-Modus nicht erkannt werden können.

Die Sicherung der impliziten Integrität durch Verwendung eines konstanten Integritätsprüfwerts (Constant Integrity Check Value, CICV) und die Verschlüsselung der Daten mit einem stark fehlerfortpflanzenden Verkettungsmodus erlaubt eine vorteilhafte Skalierung der Sicherheit durch die Verwendung beliebig langer ICVs.

Die im vorigen beschriebenen Vorteile der Anordnungen gelten ebenso für die Verfahren gemäß Patentanspruch 8, 9 und 10.

Bei dem Verfahren gemäß Patentanspruch 8 wird aus einem Datenblock eine Zwischengröße ermittelt, indem der Datenblock mit einem Block-Verschlüsselungs-Verfahren unter Berücksichtigung mindestens eines vorangegangenen Datenblocks und mindestens einer vorangegangenen Zwischengröße verschlüsselt wird. Ferner wird aus der Zwischengröße durch Verknüpfung mit mindestens einem vorangegangen kryptographisch bearbeiteten Datenblock ein kryptographisch bearbeiteter Datenblock bestimmt.

Das Verfahren gemäß Patentanspruch 9 weist im wesentlichen die inversen Schritte zu dem Verfahren gemäß Patentanspruch 8 auf. Dabei wird aus dem kryptographisch bearbeiteten Datenblock durch Verknüpfung mit einem vorangegangenen kryptographisch bearbeiteten Datenblock eine Zwischengröße ermittelt und aus der Zwischengröße wird mit einem Block-Verschlüsselungs-Verfahren eine Verknüpfungsgröße durch Entschlüsselung der Zwischengröße ermittelt. Die Verknüpfungsgröße wird mit mindestens einer vorangegangenen Zwischengröße und mit mindestens einem vorangegangenen Datenblock verknüpft, womit ein Datenblock ermittelt wird.

Bei dem Verfahren gemäß Patentanspruch 10 werden die Verfahrensschritte gemäß des Verfahrens nach Anspruch 8 und des Verfahrens nach Anspruch 9 miteinander verknüpft in der Weise, daß die kryptographisch bearbeiteten Daten zuerst in einer Sendeeinheit gebildet werden, von der Sendeeinheit zu einer Empfangseinheit übertragen werden, und dann die kryptographisch bearbeiteten Daten wiederum nach dem Verfahren gemäß Patentanspruch 9 bearbeitet werden.

Vorteilhafte Weiterbildungen der Erfindung ergeben sich aus den abhängigen Ansprüchen.

Zur Erhöhung der kryptographischen Sicherheit sowohl der Anordnung als auch der Verfahren ist es vorteilhaft, einen ersten vorgebbaren Wert in den Verknüpfungseinheiten, bzw. bei der Verknüpfung des ersten Datenblocks bzw. kryptographisch verarbeiteten ersten Datenblocks zu berücksichtigen.

Die Sicherheit des Verkettungsmodus läßt sich gegenüber anderen bekannten Verkettungsmodi dadurch vorteilhaft erhöhen, daß ein zweiter Initialisierungswert als zusätzlicher geheimer Parameter in der 1. Verarbeitungsstufe verwendet wird.

Sowohl die Anordnungen als auch die Verfahren können vorteilhaft sowohl alleine zur Verschlüsselung, alleine zur Integriätssicherung als auch zur gemeinsamen Verschlüsselung und Integritätssicherung verwendet werden.

In den Figuren sind Ausführungsbeispiele der Erfindung dargestellt, die im weiteren näher erläutert werden.

Es zeigen

Fig. 1     eine Skizze der Anordnung gemäß Patentanspruch 1;

Fig. 2     eine Skizze einer Anordnung gemäß Patentanspruch 2;

Fig. 3     eine Skizze der Anordnung gemäß Patentanspruch 3.

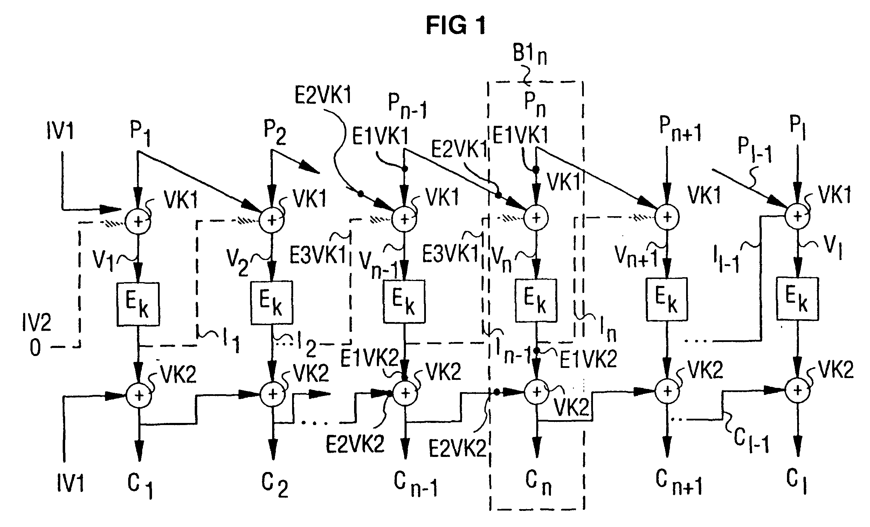

In Fig. 1 ist eine Anordnung zur kryptographischen Bearbeitung eines digitalen Datenstroms dargestellt. Der digitale Datenstrom weist eine beliebige Anzahl von Datenblöcken $P_n$ auf. Die Datenblöcke $P_n$ weisen jeweils eine beliebige Anzahl von Bits auf. Ein Index n bezeichnet jeden Datenblock des digitalen Datenstroms eindeutig und ist eine natürliche Zahl zwischen 1 und l, wobei mit l eine Anzahl von Datenblöcken $P_n$ bezeichnet wird.

Für mindestens einen Teil der Datenblöcke $P_n$ ist jeweils ein erstes Bearbeitungselement B1n vorgesehen, dessen Aufbau im weiteren näher erläutert wird.

In dem ersten Bearbeitungselement B1n ist jeweils eine erste Verknüpfungseinheit VK1, eine Verschlüsselungseinheit $E_k$ und eine zweite Verknüpfungseinheit VK2 vorgesehen.

Die erste Verknüpfungseinheit VK1 weist drei Eingänge auf. Über einen ersten Eingang E1VK1 der ersten Verschlüsselungseinheit wird der ersten Verknüpfungseinheit VK1 der Datenblock $P_n$ zugeführt. An einen zweiten Eingang E2VK1 der ersten Verknüpfungseinheit VK1 wird mindestens ein vorangegangener Datenblock $P_{n-1}$ der ersten Verknüpfungseinheit VK1 zugeführt.

Über einen dritten Eingang E3VK1 der ersten Verknüpfungseinheit VK1 wird der ersten Verknüpfungseinheit VK1 mindestens eine vorangegangene Zwischengröße $I_{n-1}$ zugeführt.

Auch wenn in Fig. 1 jeweils nur über den zweiten Eingang E2VK1 bzw. den dritten Eingang E3VK1 der ersten Verknüpfungseinheit VK1 das direkt vorangegangene Datenpaket $P_{n-1}$ bzw. die direkt vorangegangene Zwischengröße $I_{n-1}$ zugeführt wird, so ist es jedoch in alternativen Ausgestaltungen der Anordnung vorgesehen, weiter zurückliegende Datenpakete $P_{n-2}, \ldots P1$ sowie weiter zurückliegende Zwischengrößen $I_{n-2}, \ldots I_1$ der ersten Verknüpfungseinheit VK1 zuzuführen.

Die Beschreibung von lediglich einer Berücksichtigung nur des direkt vorangegangenen Datenblocks $P_{n-1}$ bzw. der vorangegangenen Zwischengröße $I_{n-1}$ dient lediglich der übersichtlicheren Darstellung der erfindungsgemäßen Anordnungen.

Die erste Verknüpfungseinheit VK1 ist mit einer Verschlüsselungseinheit $E_k$ gekoppelt. In der Verschlüsselungseinheit $E_k$ wird eine Verknüpfungsgröße $V_n$, die durch Verknüpfung der ersten Verknüpfungseinheit VK1 zugeführten Größen ermittelt wird, verschlüsselt. Die Verschlüsselung erfolgt unter Verwendung eines beliebigen sog. Block-Verschlüsselungs-Verfahrens, beispielsweise nach dem DES-Verfahren oder auch nach dem IDEA-Verfahren. Weitere Block-Verschlüsselungs-Verfahren sind ohne Einschränkung im Rahmen dieser Anordnungen und im Rahmen der Verfahren ohne weiteres einsetzbar.

Mit k wird der jeweils zur Verschlüsselung und zur im weiteren beschriebenen Entschlüsselung verwendete geheime kryptographische Schlüssel bezeichnet.

Als Ergebnis liefert die Verschlüsselungseinheit $E_k$ eine Größe $I_n$, die der verschlüsselten Verknüpfungsgröße $V_n$ entspricht. Die Zwischengröße $I_n$ wird zum einen einer im weiteren beschriebenen zweiten Verknüpfungseinheit VK2 sowie der ersten Verknüpfungseinheit VK1 des folgenden ersten Bearbeitungselements B1n+1 zugeführt.

Die Zwischengröße $I_n$ wird der zweiten Verknüpfungseinheit VK2 über einen ersten Eingang E1VK2 der zweiten Verknüpfungseinheit VK2 zugeführt.

Weiterhin weist die zweite Verknüpfungseinheit VK2 einen zweiten Eingang E2VK2 auf, über den mindestens ein vorangegangener kryptographisch bearbeiteter Datenblock $C_{n-1}, C_{n-2}, \ldots C_1$ der zweiten Verknüpfungseinheit VK2 zugeführt wird.

In der Verknüpfungseinheit VK2 werden der mindestens eine vorangegangene kryptographisch bearbeitete Datenblock $C_{n-1}$ und die Zwischengröße $I_n$ miteinander verknüpft und das Verknüpfungsergebnis bildet den kryptographisch bearbeiteten Datenblock $C_n$.

Die erste Verknüpfungseinheit VK1 und/oder die zweite Verknüpfungseinheit VK2 können derart in einer Weiterbildung der Anordnung ausgestaltet sein, daß die Verknüpfung der zugeführten Daten jeweils durch eine bitweise EXKLUSIV-ODER-Verknüpfung erfolgt.

Ferner ist es in einer Weiterbildung vorgesehen, zur Bearbeitung des ersten Datenblock $P_1$ ein erstes Bearbeitungselement B11 anderer Struktur vorzusehen. Das erste Bearbeitungselement B11 enthält jedoch wiederum die erste Verknüpfungseinheit VK1, die Verschlüsselungseinheit $E_k$ sowie die zweite Verknüpfungseinheit VK2.

Über einen ersten Eingang E1VK1 der ersten Verknüpfungseinheit VK1 wird der erste Datenblock $P_1$ der ersten Verknüpfungseinheit VK1 zugeführt. Ferner wird jedoch bei der Ausgestaltung ein frei vorgebbarer, vorteilhafterweise geheimer erster Wert IV1 der ersten Verknüpfungseinheit VK1 zugeführt.

In einer Weiterbildung ist es vorgesehen, einen frei vorgebbaren zweiten Wert über einen dritten Eingang E3VK1 der ersten Verknüpfungseinheit VK1 zuzuführen.

Ferner unterscheidet sich von dem oben beschriebenen Aufbau des ersten Bearbeitungselements B1n dieses erste Bearbeitungselement B11 zur Verarbeitung des ersten Datenpakets $P_1$ in einer Weiterbildung dadurch, daß der zweiten Verknüpfungseinheit VK2 nicht mindestens ein vorangegangener kryptographisch bearbeiteter Datenblock $C_{n-1}$ zugeführt wird,

sondern über den zweiten Eingang E2VK2 der erste Wert IV1 der zweiten Verknüpfungseinheit VK2.

Das Verfahren zur Bearbeitung des digitalen Datenstroms und zur Ermittlung der kryptographisch bearbeiteten Datenblöcke $C_n$ entspricht im wesentlichen der Struktur der oben beschriebenen Anordnung.

Dies bedeutet, daß mindestens ein Teil der Datenblöcke $P_n$ mit einem Block-Verschlüsselungs-Verfahren zu der Zwischengröße $I_n$ verschlüsselt werden. Bei der Verschlüsselung werden mindestens ein vorangegangener Datenblock $P_{n-1}$ sowie mindestens eine vorangegangene Zwischengröße $I_{n-1}$ berücksichtigt.

Die Zwischengröße $I_n$ wird mit einem vorangegangenen kryptographisch bearbeiteten Datenblock $C_{n-1}$ verknüpft, wodurch ein kryptographisch bearbeiteter Datenblock $C_n$ gebildet wird.

Es ist bei dem Verfahren in einer Weiterbildung vorgesehen, den Datenblock $P_n$, den vorangegangenen Datenblock $P_{n-1}$ sowie die vorangegangene Zwischengröße $I_{n-1}$ zu einer Verknüpfungsgröße $V_n$ zu verknüpfen, auf die das Block-Verschlüsselungs-Verfahren angewendet wird.

Ferner ist es in einer Weiterbildung des Verfahrens vorgesehen, mindestens eine der beiden oben beschriebenen Verknüpfungen als EXKLUSIV-ODER-Verknüpfung auszugestalten.

Es ist ebenso in einer Weiterbildung vorgesehen, dem ersten Datenblock $P_1$ mit dem ersten Wert IV1 und in einer weiteren Ausgestaltung mit dem zweiten Wert IV2 zu verknüpfen. Auch ist es vorgesehen, die gebildete erste Zwischengröße $I_1$ lediglich mit dem ersten Wert IV1 zu dem ersteh kryptographisch bearbeiteten Datenblock $C_1$ zu verknüpfen.

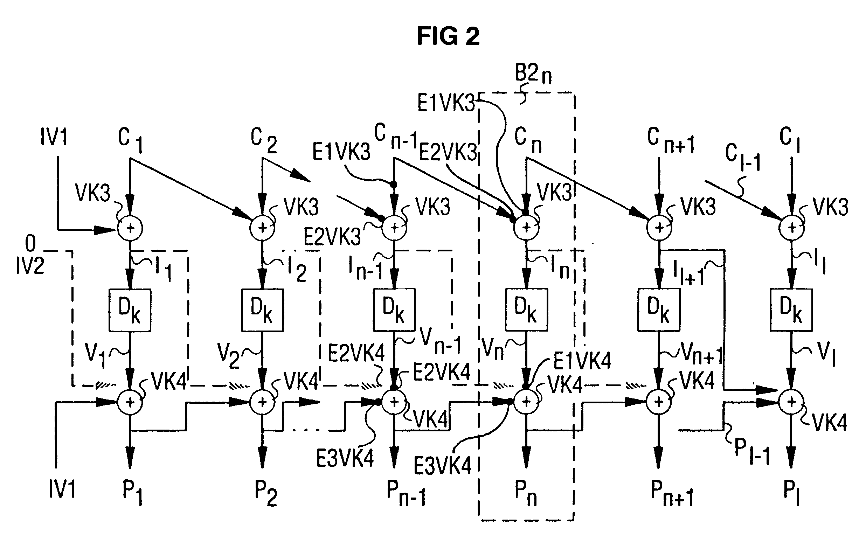

In Fig. 2 ist eine Anordnung dargestellt, mit der im wesentlichen das zu dem oben beschriebene inverse Verfahren durchgeführt werden kann.

Der Anordnung werden kryptographisch bearbeitete Datenblöcke $C_n$ zugeführt. Für mindestens einen Teil der kryptographisch bearbeiteten Datenblöcke $C_n$ ist jeweils ein zweites Bearbeitungselement B2n vorgesehen, welches mindestens eine dritte Verknüpfungseinheit VK3, eine Entschlüsselungseinheit $D_k$ sowie eine vierte Verknüpfungseinheit VK4 enthält.

Die dritte Verknüpfungseinheit VK3 weist einen ersten Eingang E1VK3 auf, über den mindestens ein vorangegangener kryptographisch bearbeiteter Datenblock $C_{n-1}$ der dritten Verknüpfungseinheit VK3 zugeführt wird.

Ferner ist ein zweiter Eingang E2VK3 der dritten Verknüpfungseinheit VK3 vorgesehen, über den mindestens ein vorangegangener kryptographisch bearbeiteter Datenblock $C_{n-1}$ der dritten Verknüpfungseinheit VK3 zugeführt wird. In der dritten Verknüpfungseinheit VK3 werden der kryptographisch bearbeitete Datenblock $C_n$ und der mindestens eine vorangegangene kryptographisch bearbeitete Datenblock $C_{n-1}$ zu der ersten Zwischengröße $I_n$ verknüpft.

Die Zwischengröße $I_n$ wird der Entschlüsselungseinheit $D_k$ zugeführt, beispielsweise über eine Kopplung der dritten Verknüpfungseinheit VK3 mit der Entschlüsselungseinheit $D_k$.

Die Entschlüsselungseinheit $D_k$ ist derart ausgestaltet, daß eine Entschlüsselung der Zwischengröße $I_n$ mit einem kryptographischen Verfahren unter Verwendung des kryptographischen Schlüssels k erfolgt.

Ergebnis der Entschlüsselung ist die Verknüpfungsgröße $V_n$. Die Verknüpfungsgröße $V_n$ wird der vierten Verknüpfungseinheit VK4 über einen ersten Eingang E1VK4 der vierten Verknüpfungseinheit VK4 zugeführt.

Ferner ist ein zweiter Eingang E2VK4 der vierten Verknüpfungseinheit vorgesehen, über den der vierten Verknüpfungseinheit VK4 mindestens eine vorangegangene Zwischengröße $I_{n-1}$, $I_{n-2}$, ... $I_2$, $I_1$ zugeführt wird.

Weiterhin ist ein dritter Eingang E3VK4 der vierten Verknüpfungseinheit VK4 vorgesehen, über den der vierten Verknüpfungseinheit VK4 mindestens ein vorangegangener Datenblock $P_{n-1}$, ... $P_2$, $P_1$ zugeführt wird.

Auch für diese Anordnung sind die oben beschriebenen Ausgestaltungen der oben beschriebenen Anordnung vorgesehen, beispielsweise die Ausgestaltung der Verknüpfungseinheiten VK3, VK4 als EXKLUSIV-ODER-Verknüpfungseinheiten. Auch die Zuführung des ersten Wertes IV1 über den zweiten Eingang E2VK3 der dritten Verknüpfungseinheit VK3 zur Bearbeitung des ersten kryptographisch bearbeiteten Datenblocks $C_1$ ist in einer Weiterbildung vorgesehen. Dies gilt ebenso für die Zuführung des ersten Wertes IV1 über den zweiten Eingang E2VK4 der vierten Verknüpfungseinheit VK4 in die vierte Verknüpfungseinheit VK4, wie auch für die Zuführung des zweiten Wertes IV2 über den dritten Eingang E3VK4 der vierten Verknüpfungseinheit VK4.

Entsprechend dieser Anordnung ist das Verfahren im wesentlichen gleichermaßen ausgestaltet. Der kryptographisch bearbeitete Datenblock $C_n$ wird mit mindestens einem vorangegangenen kryptographisch bearbeiteten Datenblock $C_{n-1}$ zu der Zwischengröße $I_n$ verknüpft. Die Zwischengröße $I_n$ wird in der Entschlüsselungseinheit $D_k$ entschlüsselt und bildet die Verknüpfungsgröße $V_n$. Die Verknüpfungsgröße $V_n$ wird mit mindestens einem vorangegangenen Zwischenwert $I_{n-1}$, ..., $I_2$, $I_1$ sowie mindestens einem vorangegangenen Datenblock $P_{n-1}$,..., $P_2$, $P_1$ verknüpft. Das Ergebnis der Verknüpfung ist dann der Datenblock $P_n$ wiederum in Klartext.

Die beiden oben beschriebenen Anordnungen werden gemeinsam in einer weiteren Anordnung gemeinsam verwendet, wobei die oben beschriebene Anordnung zur Bildung der kryptographisch bearbeiteten Datenblöcke $C_n$ in einer Sendeeinheit S und die Anordnung zur Bildung der Datenblöcke in Klartext $P_n$ in einer Empfangseinheit E vorgesehen sind.

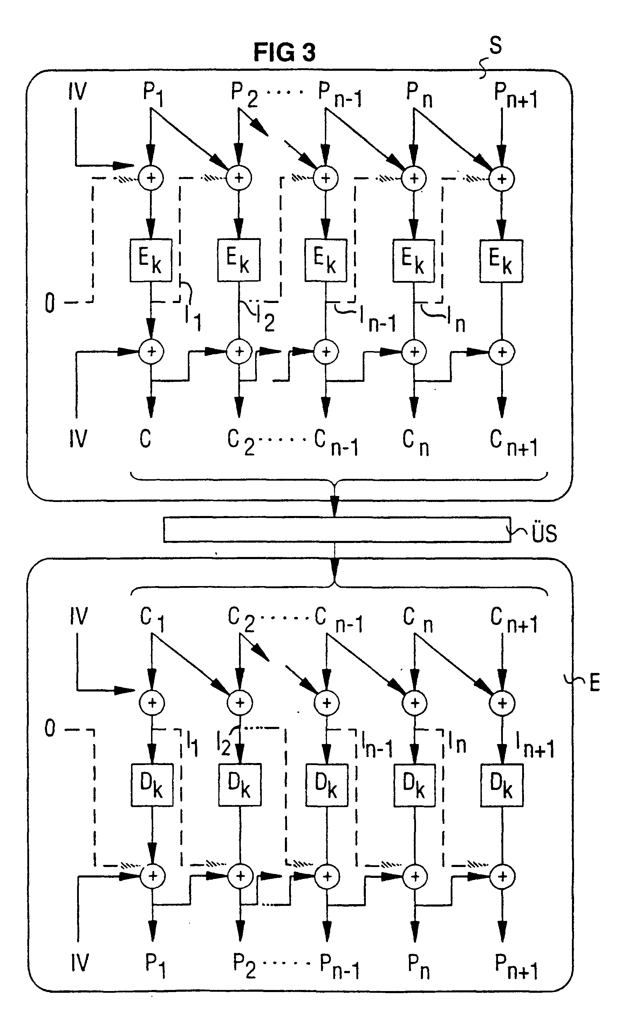

Ferner ist in dieser Anordnung ein Übertragungssystem ÜS vorgesehen, mit dem der verschlüsselte Datenstrom, der aus den kryptographisch bearbeiteten Datenblöcken $C_n$ gebildet wird, von der Sendeeinheit S zu der Empfängereinheit E übertragen wird. Es kann ein beliebiges Übertragungssystem ÜS zur Übertragung digitaler Daten, oder beispielsweise auch nach Umwandlung in analoge Daten in einem Übertragungssystem ÜS zur Übertragung analoger Daten vorgesehen sein (vgl. Fig. 3).

Entsprechend dieser in Fig. 3 dargestellten Anordnung ist auch ein Verfahren ausgestaltet, bei dem die oben beschriebenen Verfahrensschritte des Verfahrens zur Bildung der kryptographisch bearbeiteten Datenblöcke $C_n$ ohne Änderung gegenüber den oben dargestellten Verfahren durchgeführt werden. Die kryptographisch bearbeiteten Datenblöcke $C_n$ und eventuell weitere Daten, die den digitalen Datenstrom bilden, werden von der Sendeeinheit S zu der Empfängereinheit E übertragen. Das Verfahren zur Bildung der Datenblöcke $P_n$ im Klartext, die oben beschrieben wurden, wird, wie oben beschrieben ebenso ohne Änderung auf die empfangenen kryptographisch bearbeiteten Datenblöcke $C_n$ in der Empfängereinheit E durchgeführt.

Auch bei dieser Anordnung und bei dem Verfahren sind alle oben beschriebenen Weiterbildungen ohne Einschränkungen vorgesehen.

Ferner ist es in einer Weiterbildung sowohl der Anordnungen als auch der Verfahren vorgesehen, daß dem zweiten Wert IV2 der Wert 0 zugewiesen wird.

Sowohl die Anordnung als auch die Verfahren können vorteilhaft entweder nur zur Verschlüsselung, nur zur Integritätssicherung der zu übertragenen Daten oder auch zur Gewährleistung beider Sicherheitsdienste, der Vertraulichkeit und der Integrität eingesetzt werden.

Werden die Anordnungen sowie die Verfahren zur Verschlüsselung bzw. Entschlüsselung des digitalen Datenstroms verwendet, ergibt sich für die Verschlüsselung $E_k(P_1, P_2,...,P_l)$ folgender Algorithmus unter Verwendung des kryptographischen Schlüssels k mit der Ausgestaltung einer bitweisen EXKLUSIV-ODER-Verknüpfung:

$$I_n = E_k(P_n \oplus P_{n-1} \oplus I_{n-1})$$

$$C_n = I_n \oplus C_{n-1} \qquad \text{für } n \geq 1.$$

Für die Entschlüsselung $D_k(C_1; C_2,...,C_l)$ ergeben sich folgende Verfahrensschritte:

$$I_n = C_n \oplus C_{n-1}$$

$$P_n = D_k(I_n) \oplus P_{n-1} \oplus I_{n-1} \qquad \text{für } n \geq 1.$$

Sowohl mit den Anordnungen als auch mit den Verfahren wird es erreicht, daß dieser Verkettungsmodus eine starke Fehlerfortpflanzung aufweist, womit es möglich wird, lediglich einen konstanten Integritätsprüfwert CICV zur Sicherung der Integrität eines digitalen Datenstroms zu verwenden.

Der konstante Integritätsprüfwert CICV kann beispielsweise einfach in einem Datenblock an das Ende des digitalen Datenstroms angehängt werden und gleichwertig mit dem digitalen Datenstrom bearbeitet werden. Tritt ein Fehler bei der Übertragung auf oder ein Versuch, den digitalen Datenstrom in irgendeiner Weise zu verfälschen, so wird dies bei der Entschlüsselung durch die Eigenschaft der starken Fehlerfortpflanzung und der speziellen Art der Verknüpfung der einzelnen Elemente des digitalen Datenstroms erkannt.

Dadurch, daß mit diesen Anordnungen und mit diesen Verfahren ein konstanter Integritätsprüfwert CICV verwendet werden kann und keine eigene Ermittlung eines Hash-Wertes oder eines MAC-Wertes durchgeführt werden muß, wird die erforderliche Rechenkapazität zur Verschlüsselung erheblich vermindert.

Es ist jedoch ohne weiteres möglich, auch zusätzlich einen Hash-Wert bzw. einen MAC-Wert zu bilden, um diesen mit dem erfindungsgemäßen Verfahren in Verbindung mit dem digitalen Datenstrom zu bearbeiten.

Insbesondere werden folgende Angriffe durch dieses Verfahren bzw. durch diese Anordnungen erkannt:

- jede Änderung eines Bits in dem digitalen Datenstrom führt zu einer Änderung des konstanten Integritätsprüfwerts CICV und wird aus diesem Grunde erkannt;

- auch zumindest das paarweise Vertauschen der kryptographisch bearbeiteten Datenblöcke $C_n$ während der Übertragung des digitalen Datenstroms wird in der Empfängereinheit E bei Durchführung des Verfahrens bzw. bei Verwendung der Anordnung erkannt.

Ferner sind diese Anordnungen bzw. diese Verfahren sicher gegen die sog. "Known-Plaintext Attacken" vorausgesetzt, daß es für einen Angreifer anhand der Kenntnis der Datenblöcke $P_n$ und der kryptographisch bearbeiteten Datenblöcke $C_n$ dennoch unmöglich ist, den Schlüssel K und die Werte IV1 und IV2 mit einer erschöpfenden Schlüsselsuche zu ermitteln.

Dies ist darauf zurückzuführen, daß der Angreifer die Zwischengröße $I_n$ niemals ermitteln kann, da die Zwischengröße $I_n$ interne Variablen sind, ebenso wie der erste Wert IV1 bzw. der zweite Wert IV2.

Die internen Variablen werden von einem Angreifer benötigt, um eine erschöpfende Schlüsselsuche zur Gefährdung der Verschlüsselungsmethode durchzuführen.

In diesem Dokument wurden folgende Veröffentlichungen zitiert:

[1] C. J. A. Jansen, Investigations on non-linear Streamcipher Systems: Construction and Evaluation Methods, PhD. Thesis, Philips USFA BV., S. 22 - 28, 1989

[2] Kohl, The use of Encryption in Kerberos for Network Authentication, Advances in Cryptology, CRYPTO' 89, LNCS, Vol. 435, S. 35-43, Springer Verlag, 1990

[3] S. M. Matyas et al, Message Authentication with Manipulation Detection Codes; Proceedings IEEE 1983 Symposium on Security and Privacy, Oakland, Cal, S. 66 - 112, S. 359 - 366, 1982

[4] B. Schneider, Angewandte Kryptographie, Addison-Wesley Publishing Company, Bonn, ISBN 3-89319-854-7, 1. Auflage, S. 227 - 246, 1996

[5] E. Biham, "Cryptoanalysis of multiple modes of operation", Seite 278-292, Proceedings, Advances in Cryptology - ASIACRYPT'94. 4th International Conference on the Theory and Applications of Cryptology, Wollong, NSW, Australia, 28 Nov.-1 Dec. 1994, Berlin

**Patentansprüche**

1. Anordnung zur kryptographischen Bearbeitung eines digitalen Datenstroms, der eine beliebige Anzahl von Datenblöcken ($P_n$, n = 1...l) aufweist, zur Erkennung der Veränderung der Reihenfolge der kryptographisch bearbeiteten Datenblöcke, bei der für mindestens einen Teil der Datenblöcke ($P_n$) ein erstes Bearbeitungelement (B1n) vorgesehen ist, welches folgende Elemente enthält:

   - eine erste Verknüpfungseinheit (VK1), der über einen ersten Eingang (E1VK1) der Datenblock ($P_n$), über einen zweiten Eingang (E2VK1) mindestens ein vorangegangener Datenblock ($P_{n-1}$) und über einen dritten Eingang (E3VK1) mindestens eine vorangegangene Zwischengröße ($I_{n-1}$) zugeführt werden, wobei die erste Verknüpfungseinheit (VK1) derart ausgestaltet ist, daß eine Verknüpfungsgröße ($V_n$) durch Verknüpfung des Datenblocks ; ($P_n$), des vorangegangenen Datenblocks ($P_{n-1}$) und der vorangegangenen Zwischengröße ($I_{n-1}$) ermittelt wird,
   - eine Verschlüsselungseinheit ($E_K$), mit der durch Anwendung eines Block-Verschlüsselungsverfahren auf die Verknüpfungsgröße ($V_n$) eine Zwischengröße ($I_n$) ermittelt wird, und

   - eine zweite Verknüpfungseinheit (VK2), der über einen ersten Eingang (E1VK2) die Zwischengröße ($I_n$) und über einen zweiten Eingang (E2VK2) mindestens ein vorangegangener kryptographisch bearbeiteter Datenblock ($C_{n-1}$) zugeführt werden, wobei die zweite Verknüpfungseinheit (VK2) derart ausgestaltet ist, daß ein kryptographisch bearbeiteter Datenblock ($C_n$) durch Verknüpfung der Zwischengröße ($I_n$) und dem vorangegangenen kryptographisch bearbeiteten Datenblock ($C_{n-1}$) ermittelt wird.

2. Anordnung zur kryptographischen Bearbeitung eines kryptographisch bearbeiteten digitalen Datenstroms, der eine beliebige Anzahl von kryptographisch bearbeiteten Datenblöcken ($C_n$, n = 1...l) aufweist, zur Erkennung der Veränderung der Reihenfolge der kryptographisch bearbeiteten Datenblöcke, bei der für mindestens einen Teil der kryptographisch bearbeiteten Datenblöcke ($C_n$) ein zweites Bearbeitungelement (B2n) vorgesehen ist, welches folgende Elemente enthält:

   - eine dritte Verknüpfungseinheit (VK3), der über einen ersten Eingang (E1VK3) ein kryptographisch bearbeiteter Datenblock ($C_n$) und über einen zweiten Eingang (E2VK3) mindestens ein vorangegangener kryptographisch bearbeiteter Datenblock ($C_{n-1}$) zugeführt werden, wobei die dritte Verknüpfungseinheit (VK3) derart ausgestaltet ist, daß eine Zwischengröße ($I_n$) durch Verknüpfung des kryptographisch bearbeiteten Datenblocks ($C_n$) und dem vorangegangenen kryptographisch bearbeiteten Datenblock ($C_{n-1}$) ermittelt wird,
   - eine Entschlüsselungseinheit ($D_K$), mit der durch Anwendung eines Block-Verschlüsselungsverfahren auf die Zwischengröße ($I_n$) eine Verknüpfungsgröße ($V_n$) ermittelt wird, und
   - eine vierte Verknüpfungseinheit (VK4), der über einen ersten Eingang (E1VK4) die Verknüpfungsgröße ($V_n$), über einen zweiten Eingang (E2VK4) mindestens eine vorangegangene Zwischengröße ($I_{n-1}$) und über einen dritten Eingang (E3VK4) mindestens ein vorangegangener Datenblock ($P_{n-1}$) zugeführt werden, wobei die vierte Verknüpfungseinheit (VK4) derart ausgestaltet ist, daß ein Datenblock ($P_n$) durch Verknüpfung der Verknüpfungsgröße ($V_n$), der vorangegangenen Zwischengröße ($I_{n-1}$) und dem vorangegangener Datenblock ($P_{n-1}$) ermittelt wird.

3. Anordnung nach Anspruch 1 oder 2, bei der mindestens eine der Verknüpfungseinheiten (VK1, VK2, VK3, VK4) derart ausgestaltet ist bzw. sind, daß die der Verknüpfungseinheit (VK1, VK2, VK3, VK4) zugeführten Größen EXKLUSIV-ODER miteinander verknüpft werden.

4. Anordnung nach einem der Ansprüche 1 bis 3, bei der mindestens eine der Verknüpfungseinheiten (VK1, VK2, VK3, VK4) derart ausgestaltet ist bzw. sind, daß der Verknüpfungseinheit (VK1, VK2, VK3, VK4) über einen ersten Eingang (E1VK1, E1VK2, E1VK3, E1VK4) ein erster Datenblock ($P_1$) bzw. eine erste Zwischengröße ($I_1$) bzw. ein erster kryptographisch bearbeiteter Datenblock ($C_n$) bzw. eine erste Verknüpfungsgröße (VK1) und über einen zweiten Eingang (E2VK1) ein vorgebbarer erster Wert (IV1) zugeführt werden.

5. Anordnung nach Anspruch 4, bei der die erste Verknüpfungseinheit (VK1) und/oder die vierte Verknüpfungseinheit (VK4) des ersten Bearbeitungelements (B1n) bzw. des zweiten Bearbeitungelements (B2n) eines ersten Datenblocks ($P_1$) derart ausgestaltet ist, daß über einen dritten Eingang (E3VK1, E3VK4) ein vorgebbarer zweiter Wert (IV2) zugeführt wird.

6. Anordnung nach Anspruch 5, bei der dem zweiten Wert (IV2) der Wert 0 zugewiesen wird.

7. Verfahren zur kryptographischen Bearbeitung von einem digitalen Datenstrom, der eine beliebige Anzahl von Datenblökken ($P_n$, n = 1...l) aufweist, bei dem für mindestens einen Teil der Datenblöcke ($P_n$) folgende Verfahrensschritte vorgesehen sind:

- aus dem Datenblock ($P_n$) wird mit einem Block-Verschlüsselungsverfahren unter Berücksichtigung mindestens eines vorangegangenen Datenblocks ($P_{n-1}$) und mindestens einer vorangegangenen Zwischengröße ($I_{n-1}$) des vorangegangenen Datenblocks ($P_{n-1}$) eine Zwischengröße ($I_n$) ermittelt,
- durch Verknüpfung der Zwischengröße ($I_n$) mit mindestens einem vorangegangenen kryptographisch bearbeiteten Datenblock ($C_{n-1}$) des vorangegangenen Datenblocks ($P_{n-1}$) wird ein kryptographisch bearbeiteter Datenblock ($C_n$) gebildet.

8. Verfahren zur kryptographischen Bearbeitung eines kryptographisch bearbeiteten digitalen Datenstroms, der eine beliebige Anzahl von kryptographisch bearbeiteten Datenblöcken ($C_n$, n = 1...l) aufweist, zur Erkennung der Veränderung der Reihenfolge der kryptographisch bearbeiteten Datenblöcke, bei dem für mindestens einen Teil der kryptographisch bearbeiteten Datenblöcken ($C_n$) folgende Verfahrensschritte vorgesehen sind:

- aus dem kryptographisch bearbeiteten Datenblock ($C_n$) wird durch Verknüpfung mit einem vorangegangenen kryptographisch bearbeiteten Datenblock ($C_{n-1}$) eine Zwischengröße ($I_n$) ermittelt,
- aus der Zwischengröße ($I_n$) wird mit einem Blockverschlüsselungsverfahren eine Verknüpfungsgröße ($V_n$) ermittelt,
- durch Verknüpfung der Verknüpfungsgröße ($V_n$) mit mindestens einer vorangegangenen Zwischengröße ($I_{n-1}$) und mindestens einem vorangegangenen Datenblock ($P_{n-1}$) wird ein Datenblock ($P_n$) ermittelt.

9. Verfahren nach Anspruch 7 oder 8, bei dem aus dem Datenblock ($P_n$), aus dem mindestens einen vorangegangenen Datenblock ($P_{n-1}$) und aus der mindestens einen vorangegangenen Zwischengröße ($I_{n-1}$) des vorangegangenen Datenblocks ($P_{n-1}$) eine Verknüpfungsgröße ($V_n$) durch Verknüpfung des Datenblocks ($P_n$), des vorangegangenen Datenblocks ($P_{n-1}$) und der vorangegangenen Zwischengröße ($I_{n-1}$) ermittelt wird, und

- bei dem das Block-Verschlüsselungsverfahren auf die Verknüpfungsgröße ($V_n$) angewendet wird.

10. Verfahren nach einem der Ansprüche 7 bis 9, bei dem mindestens eine der Verknüpfungen als eine EXKLUSIV-ODER-Verknüpfung erfolgt.

11. Verfahren nach einem der Ansprüche 7 bis 10, bei dem ein erster Datenblock ($P_1$) bzw. eine erste Zwischengröße ($I_1$) bzw. ein erster kryptographisch bearbeiteter Datenblock ($C_1$) bzw. eine erste Verknüpfungsgröße ($V_1$) bearbeitet wird, indem der erste Datenblock ($P_1$) bzw. die erste Zwischengröße ($I_1$) bzw. der erste kryptographisch bearbeitete Datenblock ($C_1$) mit einem vorgebbaren ersten Wert (IV1) bzw. die erste Verknüpfungsgröße ($V_1$) verknüpft wird.

12. Verfahren nach Anspruch 11, indem ein vorgebbarer zweiter Wert (IV2) bei der Verknüpfung des ersten Datenblocks ($P_1$) bzw. der ersten Zwischengröße ($I_1$) bzw. dem ersten kryptographisch bearbeiteten Datenblock ($C_1$) berücksichtigt wird.

13. Verfahren nach Anspruch 12, bei dem dem zweiten Wert (IV2) der Wert 0 zugewiesen wird.

14. Verwendung der Anordnung nach einem der Ansprüche 1 bis 7 und/oder des Verfahrens nach einem der Ansprüche 8 bis 15 zur Verschlüsselung bzw. Entschlüsselung des Datenstroms und/oder zur Integritätssicherung des Datenstroms.

## Claims

1. Arrangement for cryptographic processing of a digital data stream which has an undefined number of data blocks ($P_n$, n = 1...1), for identification of a change to the sequence of the cryptographically processed data blocks, in which a first processing element (B1n) is provided for at least some of the data blocks ($P_n$), and contains the following elements:

   - a first logic linking unit (VK1) to which the data block ($P_n$) is supplied via a first input (E1VK1), at least one previous data block ($P_{n-1}$) is supplied via a second input (EV2VK1), and at least one preceding intermediate variable ($I_{n-1}$) is supplied via a third input (E3VK1) in which the first logic linking unit (VK1) is designed such that a logic linking variable ($V_n$) is determined by linking the data block ($P_n$), the preceding data block ($P_{n-1}$) and the preceding intermediate variable ($I_{n-1}$),
   - a scrambling unit ($E_K$) by means of which an intermediate variable ($I_n$) is determined by applying a block scrambling method to the logic linking variable ($V_n$), and
   - a second logic linking unit (VK2) to which the intermediate variable ($I_n$) is supplied via a first input (E1VK2) and a preceding cryptographically processed data block ($C_{n-1}$) is supplied via a second input (VK2), with the second logic linking unit (VK2) being designed such that a cryptographically processed data block ($C_n$) is determined by linking the intermediate variable ($I_n$) and the preceding cryptographically processed data block ($C_{n-1}$).

2. Arrangement for cryptographic processing of a cryptographically processed digital data stream, which has an undefined number of cryptographically processed data blocks ($C_n$, n = 1...l), for identification of any change to the sequence of the cryptographically processed data blocks, in which a second processing element (B2n) is provided for at least some of the cryptographically processed data blocks ($C_n$) and contains the following elements:

   - a third logic linking unit (VK3), to which a cryptographically processed data block ($C_n$) is supplied via a first input (E1VK3) and at least one preceding cryptographically processed data block ($C_{n-1}$) is supplied via a second input (E2VK3), with the third logic linking unit (VK3) being designed such that an intermediate variable ($I_n$) is determined by linking the cryptographically processed data block ($C_n$) and the preceding cryptographically processed data block ($C_{n-1}$),
   - a descrambling unit ($D_K$), by means of which a logic linking variable ($V_n$) is determined by applying a block scrambling method to the intermediate variable ($I_n$), and
   - a fourth logic linking unit (VK4), to which the logic linking variable ($V_n$) is supplied via a first input (E1VK4), at least one preceding intermediate variable ($I_{n-1}$) is supplied via a second input (E2VK4), and at least one preceding data block ($P_{n-1}$) is supplied via a third input (E3VK4), with the fourth logic linking unit (VK4) being designed such that a data block ($P_n$) is determined by linking the logic linking variable ($V_n$), the preceding intermediate variable ($I_{n-1}$) and the preceding data block ($P_{n-1}$).

3. Arrangement according to Claim 1 or 2, in which at least one of the logic linking units (VK1, VK2, VK3, VK4) is or are designed such that the variables which are supplied to the logic linking unit (VK1, VK2, VK3, VK4) are EXCLUSIVE-OR logically linked to one another.

4. Arrangement according to one of Claims 1 to 3, in which at least one of the logic linking units (VK1, VK2, VK3, VK4) is or are designed such that the logic linking unit (VK1, VK2, VK3, VK4) is supplied with a first data block ($P_1$), or with a first intermediate variable ($I_1$) or with a first cryptographically processed data block ($C_n$) or with a first logic linking variable (VK1) via a first input (E1VK1, E1VK2, E1VK3, E1VK4), and is supplied with a first value (IV1), which can be predetermined, via a second input (E2VK1).

5. Arrangement according to Claim 4, in which the first logic linking unit (VK1) and/or the fourth logic linking unit (VK4) of the first processing element (B1n) and of the second processing element (B2n) of a first data block ($P_1$) are designed such that a second value (IV2), which can be predetermined, is supplied via a third input (E3VK1, E3VK4).

6. Arrangement according to Claim 5, in which the second value (IV2) is assigned the value 0.

7. Method for cryptographic processing of a digital data stream which has an undefined number of data blocks ($P_n$, n = 1...l), in which the following method steps are provided for at least some of the data blocks ($P_n$):

- an intermediate variable ($I_n$) is determined from the data block ($P_n$) using a block scrambling method and taking into account at least one preceding data block ($P_{n-1}$) and at least one preceding intermediate variable ($I_{n-1}$) of the preceding data block ($P_{n-1}$),
- a cryptographically processed data block ($C_n$) is formed via linking the intermediate variable ($I_n$) to at least one preceding cryptographically processed data block ($C_{n-1}$) of the preceding data block ($P_{n-1}$).

8. Method for cryptographic processing of a cryptographically processed data stream, which has an undefined number of cryptographically processed data blocks ($C_n$, n = 1...l), for identification of any change in the sequence of the cryptographically processed data blocks, in which the following method steps are provided for at least some of the cryptographically processed data blocks ($C_n$) :

- an intermediate variable ($I_n$) is determined from the cryptographically processed data block ($C_n$) by linking to a preceding cryptographically processed data block ($C_{n-1}$),
- a logic linking variable ($V_n$) is determined from the intermediate variable ($I_n$) using a block scrambling method, and
- a data block ($P_n$) is determined by linking the logic linking variable ($V_n$) to at least one preceding intermediate variable ($I_{n-1}$) and to at least one preceding data block ($P_{n-1}$).

9. Method according to Claim 7 or 8, in which a logic linking variable ($V_n$) is determined from the data block ($P_n$), from the at least one preceding data block ($P_{n-1}$) and from the at least one preceding intermediate variable ($I_{n-1}$) of the preceding data block ($P_{n-1}$) by linking the data block ($P_n$), the preceding data block ($P_{n-1}$) and the preceding intermediate variable ($I_{n-1}$), and

- in which the block scrambling method is applied to the logic linking variable ($V_n$).

10. Method according to one of Claims 7 to 9, in which at least one of the logic linking processes is in the form of an EXCLUSIVE-OR logic linking process.

11. Method according to one of Claims 7 to 10, in which a first data block ($P_1$) or a first intermediate variable ($I_1$) or a first cryptographically processed data block ($C_1$) or a first logic linking variable ($V_1$) is processed in that the first data block ($P_1$) or the first intermediate variable ($I_1$) or the first cryptographically processed data block ($C_1$) is logically linked with a first value (IV1), which can be predetermined, or the first logic linking variable ($V_1$).

12. Method according to Claim 11, in that a second value (IV2), which can be predetermined, is taken into account in the logic linking process of the first data block ($P_1$) or of the first intermediate variable ($I_1$), or of the first cryptographically processed data block ($C_1$).

13. Method according to Claim 12, in which the second value (IV2) is assigned the value 0.

14. Use of the arrangement according to one of Claims 1 to 7 and/or of the method according to one of Claims 8 to 15 for scrambling or descrambling the data stream and/or for protecting the integrity of the data stream.

**Revendications**

1. Configuration pour le traitement cryptographique d'un flux de données numériques, présentant un nombre quelconque de blocs de données ($P_n$, n = 1 ... l) pour la reconnaissance de la modification de l'ordre chronologique des blocs de données soumises à un traitement cryptographique, dans laquelle un premier élément de traitement (B1n), qui comprend les éléments suivants, est prévu pour au moins une partie des blocs de données (Pn) :

- une première unité d'enchaînement (VK1), à laquelle le bloc de données ($P_n$) est amené par l'intermédiaire de la première entrée (E1VK1), à laquelle au moins un bloc précédent de données ($P_{n-1}$) est amené par l'intermédiaire d'une seconde entrée (E2VK1) et à laquelle au moins une valeur intermédiaire précédente ($I_{n-1}$) est amenée par l'intermédiaire d'une troisième entrée (E3VK1), la première unité d'enchaînement (VK1) étant conçue de manière à ce qu'une valeur d'enchaînement ($V_n$) soit déterminée par enchaînement du bloc de données ($P_n$), du bloc de données précédent ($P_{n-1}$) et de la valeur intermédiaire précédente ($I_{n-1}$),
- une unité de cryptage ($E_k$), à l'aide de laquelle une valeur intermédiaire ($I_n$) est déterminée, par application d'un procédé de cryptage en blocs sur la valeur d'enchaînement ($V_n$) et
- une seconde unité d'enchaînement (VK2), à laquelle la valeur intermédiaire ($I_n$) est amenée par l'intermédiaire d'une première entrée (E1VK2) et à laquelle au moins un bloc précédent de données soumises à un traitement cryptographique ($C_{n-1}$) est amené par l'intermédiaire d'une seconde entrée (E2VK2), la seconde unité d'enchaînement (VK2) étant conçue de manière à ce qu'un bloc de données soumises à un traitement cryptographique ($C_n$) soit déterminé par enchaînement de la valeur intermédiaire ($I_n$) et du bloc précédent de données soumises à un traitement cryptographique ($C_{n-1}$).

2. Configuration pour le traitement cryptographique d'un flux de données numériques soumises à un traitement cryptographique, présentant un nombre quelconque de blocs de données soumises à un traitement cryptographique ($C_n$, n = 1 ... I), pour la reconnaissance de la modification de l'ordre chronologique des blocs de données soumises à un traitement cryptographique, dans laquelle un second élément de traitement (B2n), qui comprend les éléments suivants, est prévu pour au moins une partie des blocs de données soumises à un traitement cryptographique ($C_n$) :

   - une troisième unité d'enchaînement (VK3), à laquelle un bloc de données soumises à un traitement cryptographique ($C_n$) est amené par l'intermédiaire d'une première entrée (E1VK3) et à laquelle au moins un bloc précédent de données soumises à un traitement cryptographique ($C_{n-1}$) est amené par l'intermédiaire d'une seconde entrée (E2VK3), la troisième unité d'enchaînement (VK3) étant conçue de manière à ce qu'une valeur intermédiaire ($I_n$) soit déterminée par enchaînement du bloc de données soumises à un traitement cryptographique ($C_n$) et du bloc précédent de données, soumises à un traitement cryptographique ($C_{n-1}$),
   - une unité de décryptage ($D_k$), à l'aide de laquelle une valeur d'enchaînement ($V_n$) est déterminée, par application d'un procédé de décryptage en blocs sur la valeur intermédiaire ($I_n$) et
   - une quatrième unité d'enchaînement (VK4), à laquelle la valeur d'enchaînement ($V_n$) est amenée par l'intermédiaire d'une première entrée (E1VK4) et à laquelle au moins une valeur intermédiaire précédente ($I_{n-1}$) est amenée par l'intermédiaire d'une seconde entrée (E2VK4) et à laquelle au moins un bloc de données précédent ($P_{n-1}$) est amené par l'intermédiaire d'une troisième entrée (E3VK4), la quatrième unité d'enchaînement (VK4) étant conçue de manière à ce qu'un bloc de données ($P_n$) soit déterminé par enchaînement de la valeur d'enchaînement ($V_n$), de la valeur intermédiaire précédente ($I_{n-1}$) et du bloc de données précédent ($P_{n-1}$).

3. Configuration selon l'une quelconque des revendications 1 ou 2, dans laquelle au moins l'une des unités d'enchaînements (VK1, VK2, VK3, VK4) est conçue ou sont conçues de manière à ce que les valeurs amenées à l'unité d'enchaînement (VK1, VK2, VK3, VK4) soient enchaînées entre elles en mode EXCLUSIF-OU.

4. Configuration selon l'une quelconque des revendications 1 à 3, dans laquelle au moins l'une des unités d'enchaînements (VK1, VK2, VK3, VK4) est conçue ou sont conçues de manière à ce qu'un premier bloc de données ($P_1$) ou une première valeur intermédiaire ($I_1$) ou un premier bloc de données soumises à un traitement cryptographique ($C_n$) ou une première valeur d'enchaînement (VK1) soit amené(e) à l'unité d'enchaînement (VK1, VK2, VK3, VK4), par l'intermédiaire d'une première entrée (E1VK1, E1VK2, E1VK3, E1VK4) et à ce qu'une première valeur prédéfinissable (IV1) lui soit amenée par l'intermédiaire d'une seconde entrée (E2VK1).

5. Configuration selon la revendication 4, dans laquelle la première unité d'enchaînement (VK1) et/ou la quatrième unité d'enchaînement (VK4) du premier élément de traitement (B1n) ou du second élément de traitement (B2n) d'un premier bloc de données ($P_1$) est conçue de manière à ce qu'une seconde valeur prédéfinissable (IV2) soit amenée par l'intermédiaire d'une troisième entrée (E3VK1, E3VK4).

6. Configuration selon la revendication 5, dans laquelle la valeur 0 est affectée à la seconde valeur (IV2).

7. Procédé pour le traitement cryptographique d'un flux de données numériques, présentant un nombre quelconque de blocs de données ($P_n$, n = 1 ... I), dans lequel les étapes de procédé suivantes sont prévues pour au moins une partie des blocs de données ($P_n$):

   - à l'aide d'un procédé de cryptage en blocs, une valeur intermédiaire ($I_n$) est déterminée à partir du bloc de données ($P_n$), sous considération d'au moins un bloc de données précédent ($P_{n-1}$) et d'au moins une valeur intermédiaire précédente ($I_{n-1}$) du bloc de données précédent ($P_{n-1}$),
   - un bloc de données soumises à un traitement cryptographique ($C_n$) est créé par enchaînement de la valeur intermédiaire ($I_n$) avec au moins un bloc précédent de données soumises à un traitement cryptographique ($C_{n-1}$) du bloc de données précédent ($P_{n-1}$).

8. Procédé pour le traitement cryptographique d'un flux de données numériques, présentant un nombre quelconque de blocs de données soumises à un traitement cryptographique ($C_n$, n = 1 ... I), pour la reconnaissance de la modification de l'ordre chronologique des blocs de données soumises à un traitement cryptographique, dans lequel les étapes de procédé suivantes sont prévues pour au moins une partie des blocs de données soumises à un traitement cryptographique ($C_n$) :

- par enchaînement avec un bloc précédent de données soumises à un traitement cryptographique ($C_{n-1}$), une valeur intermédiaire ($I_n$) est déterminée à partir du bloc de données soumises à un traitement cryptographique ($C_n$),
- à l'aide d'un procédé de cryptage en blocs, une valeur d'enchaînement ($V_n$) est déterminée à partir de la valeur intermédiaire ($I_n$),
- un bloc de données ($P_n$) est déterminé par enchaînement de la valeur d'enchaînement ($V_n$) avec au moins une valeur intermédiaire précédente ($I_{n-1}$) et avec au moins un bloc de données précédent ($P_{n-1}$).

9. Procédé selon l'une quelconque des revendications 7 ou 8, dans lequel une valeur d'enchaînement ($V_n$) est déterminée à partir du bloc de données ($P_n$), à partir d'au moins le bloc de données précédent ($P_{n-1}$) et à partir d'au moins la valeur intermédiaire ($I_{n-1}$) du bloc de données précédent ($P_{n-1}$), par enchaînement du bloc de données ($P_n$), du bloc de données précédent ($P_{n-1}$) et de la valeur intermédiaire précédente ($I_{n-1}$) et

- dans lequel le procédé de cryptage en blocs est appliqué sur la valeur d'enchaînement ($V_n$).

10. Procédé selon l'une quelconque des revendications 7 à 9, dans lequel au moins l'un des enchaînements est pratiqué sous forme d'un enchaînement EXCLUSIF-OU.

11. Procédé selon l'une quelconque des revendications 7 à 10, dans lequel un premier bloc de données ($P_1$) ou une première valeur intermédiaire ($I_1$) ou un premier bloc de données soumises à un traitement cryptographique ($C_1$) ou une première valeur d'enchaînement ($V_1$) est traité, par enchaînement du premier bloc de données ($P_1$) ou de la première valeur intermédiaire ($I_1$) ou du premier bloc de données soumises à un traitement cryptographique ($C_1$) avec une première valeur prédéfinissable (IV1) ou la première valeur d'enchaînement (V1).

12. Procédé selon la revendication 11, dans lequel une seconde valeur prédéfinissable (IV2) est prise en considération pour l'enchaînement du premier bloc de données ($P_1$) ou de la première valeur intermédiaire ($I_1$) ou du premier bloc de données soumises à un traitement cryptographique ($C_1$).

13. Procédé selon la revendication 12, dans lequel la valeur 0 est affectée à la seconde valeur (IV2).

14. Utilisation de la configuration selon l'une quelconque des revendications 1 à 6 et/ou du procédé selon l'une quelconque des revendications 7 à 13 pour le cryptage ou le décryptage du flux de données et pour la protection de l'intégrité du flux de données.

**FIG 1**

**FIG 2**

## FIG 3